# EUROPÄISCHE PATENTSCHRIFT

(11) **EP 2 768 199 B1**
(45) Veröffentlichungstag und Bekanntmachung des Hinweises auf die Patenterteilung: **21.11.2018**
(21) Anmeldenummer: 13000749.5
(22) Anmeldetag: 14.02.2013
(51) Int. Cl.: H04W 12/08, H04W 4/80, H04W 4/50, G06Q 20/04, G06Q 20/22, G06Q 30/06, G06Q 20/32

(54) **VERFAHREN ZUR ÜBERTRAGUNG ÜBER EIN TELEKOMMUNIKATIONSNETZ EINER BERECHTIGUNGSINFORMATION ODER EINER MIT EINEM TELEKOMMUNIKATIONSENDGERÄT ASSOZIIERTEN BERECHTIGUNG. TELEKOMMUNIKATIONSENDGERÄT, SYSTEM. COMPUTERPROGRAMM UND COMPUTERPROGRAMMPRODUKT**
METHOD FOR TRANSFERRING AUTHORIZATION INFORMATION THROUGH A TELECOMMUNICATIONS NETWORK OR AN AUTHORIZATION ASSOCIATED WITH A TELECOMMUNICATION TERMINAL. TELECOMMUNICATIONS TERMINAL, SYSTEM. COMPUTER PROGRAM AND A COMPUTER PROGRAM PRODUCT
PROCÉDÉ DE TRANSMISSION, VIA UN RÉSEAU DE TÉLÉCOMMUNICATIONS, D'UNE INFORMATION D'AUTORISATION OU D'UNE AUTORISATION ASSOCIÉE À UN TERMINAL DE TÉLÉCOMMUNICATION. TERMINAL DE TÉLÉCOMMUNICATION, SYSTÈME. PROGRAMME INFORMATIQUE ET PRODUIT DE PROGRAMME INFORMATIQUE

(43) Veröffentlichungstag der Anmeldung: 20.08.2014
(73) Patentinhaber: Deutsche Telekom AG, 53113 Bonn (DE)
(72) Erfinder: Boegelsack, Martin, 16562 Bergfelde (DE); Baraniak, Andrzej, 03-144 Warszawa (PL); Mleczko, Marcin, 03-984 Warszawa (PL)
(74) Vertreter: Schwöbel, Thilo K.

(56) Entgegenhaltungen:
- EP-A1- 2 461 613
- WO-A2-2009/060393
- US-A1- 2011 093 318

## Beschreibung

### Stand der Technik

Die Erfindung betrifft ein Verfahren zur Übertragung über ein Telekommunikationsnetz
-- einer in einem Speicherbereich eines Telekommunikationsendgeräts gespeicherten und mittels einer NFC-Schnittstelle (Near Field Communication Schnittstelle) benutzbaren Berechtigungsinformation oder
-- einer mit einem Telekommunikationsendgerät assoziierten und mittels einer NFC-Schnittstelle benutzbaren Berechtigung
von einem ersten Telekommunikationsendgerät auf ein zweites Telekommunikationsendgerät.

Die Erfindung betrifft ferner auch ein Telekommunikationsendgerät und ein System umfassend ein Telekommunikationsendgerät mit einer NFC-Schnittstelle (Near Field Communication Schnittstelle) und einer ersten Drahtlosschnittstelle zur Übertragung
-- einer in einem Speicherbereich des Telekommunikationsendgeräts gespeicherten und mittels einer NFC-Schnittstelle (Near Field Communication Schnittstelle) benutzbaren Berechtigungsinformation oder
-- einer mit dem Telekommunikationsendgerät assoziierten und mittels einer NFC-Schnittstelle benutzbaren Berechtigung
vom Telekommunikationsendgerät auf ein zweites Telekommunikationsendgerät.

Ferner betrifft die Erfindung auch ein Computerprogramm mit Programmcodemitteln und ein Computerprogrammprodukt.

Telekommunikationsendgeräte, insbesondere mobile Telefone und andere tragbare Geräte mit einer NFC-Schnittstelle (Near Field Communication Schnittstelle) und damit auch mit NFC-Fähigkeiten - etwa Rechner mit berührungsempfindlichen Bildschirmen (sog. Tablet Computer), PDAs (Persönliche Digitale Assistenten) oder dergleichen - können für Bezahldienste, Zugangskontrolle, Loyalitäts-Programme (sog. Loyalty Programme), usw. benutzt werden. Sobald das Anwendungsprogramm bzw. die Applikation und/oder die damit verbundenen Schlüssel, welche mit solchen Diensten verbunden sind, in dem sicheren Element (SE, secure element) des mobilen Geräts oder Mobiltelefons bzw. Telekommunikationsendgeräts vorhanden sind (beispielsweise in der SIM/UICC-ID, zusammen mit dem Datensatz, der den SP, sowie die Applikation (bzw. die App) und den Kunden, identifiziert) ist es möglich, dass der Berechtigte, in der Regel ein Kunde (und nur der Berechtigte) des mobilen Geräts diese Dienste bzw. Applikationen nutzt, insbesondere unter Nutzung der NFC-Schnittstelle, d.h. zur Durchführung einer lokalen Informationsübertragung mit einem Gegengerät,etwa ein Kassen- bzw. Einlasssystem für einen Veranstaltungsort, oder ein Fahrkartenautomat oder ein Verkaufspunkt oder dergleichen.

Es sind nun mehrere Fälle denkbar, in denen etwa der ursprüngliche Besitzer der Applikation mit den Schlüssel "seine" Applikation an einen anderen Kunden weitergeben will. Solche Situationen können beispielsweise die Weitergabe von Konzerttickets im Verhinderungsfalle oder auch als Geschenk, die Übertragung von Loyalitätspunkten, die teilweise oder komplette Übertragung von Payment Karten, oder die Übertragung von Rechten zur Benutzung eines Fahrzeugs oder einer Wohnung sein.

Bei derzeitigen Implementierungen von zur Nutzung mit einer NFC-Schnittstelle vorgesehenen Diensten ist aus Sicherheitsgründen lediglich eine Übertragung der Berechtigungsinformationen von einer Servereinrichtung (des Anbieters des nachgefragten Dienstes oder der Anwendung) auf ein Telekommunikationsendgerät bzw. einen Benutzer vorgesehen, eine Übertragung einer Berechtigungsinformation bzw. einer mit einem Telekommunikationsendgerät assoziierten Berechtigung vom ersten Telekommunikationsendgerät zum zweiten Telekommunikationsendgerät derart, dass die Telekommunikationsendgeräte über die Reichweite der NFC-Schnittstelle hinaus voneinander entfernt sind, ist nicht vorgesehen. Patentschrift WO 2009/060393 bezieht sich auf ein System zur Übertragung von Berechtigungsinformationen, die mittels einer NFC-Schnittstelle benutzbar sind, wobei die Übertragung zwischen zwei Telekommunikationsgeräte stattfindet, und diese Überträgung entweder über eine Servereinrichtung oder alternativ direkt über eine NFC-Schnittstelle stattfindet.

### Offenbarung der Erfindung

Der Erfindung liegt die Aufgabe zugrunde, ein Verfahren zur Übertragung entweder einer Berechtigungsinformation oder einer mit einem Telekommunikationsendgerät assoziierten Berechtigung von einem ersten eine NFC-Schnittstelle aufweisendes Telekommunikationsendgerät auf ein zweites eine NFC-Schnittstelle aufweisendes Telekommunikationsendgerät anzugeben, mit dem es einem Benutzer möglich ist, die Nutzung eines Dienstes bzw. einer Anwendung beim zweiten Telekommunikationsendgerät zu ermöglichen, welches zeitlich vor der Übertragung der Berechtigungsinformation bzw. der mit dem ersten Telekommunikationsendgerät assoziierten Berechtigung zur Nutzung dieses Dienstes bzw. dieser Anwendung zumindest nicht in gleichartiger Weise freigeschaltet war, wobei das erste Telekommunikationsendgerät und das zweite Telekommunikationsendgerät während der Übertragung der Berechtigungsinformation oder der Berechtigung vergleichswiese weit voneinander entfernt lokalisiert sind.

Diese Aufgabe wird erfindungsgemäß gelöst durch ein Verfahren, gemäß Anspruch 1, zur Übertragung über ein Telekommunikationsnetz
-- einer in einem Speicherbereich eines Telekommunikationsendgeräts gespeicherten und mittels einer NFC-Schnittstelle (Near Field Communication Schnittstelle) benutzbaren Berechtigungsinformation oder
-- einer mit einem Telekommunikationsendgerät assoziierten und mittels einer NFC-Schnittstelle benutzbaren Berechtigung
von einem ersten Telekommunikationsendgerät auf ein zweites Telekommunikationsendgerät,
wobei in einem ersten Zeitpunkt die Berechtigungsinformation in einem ersten Speicherbereich des ersten Telekommunikationsendgeräts gespeichert ist oder die Berechtigung mit dem ersten Telekommunikationsendgerät assoziiert ist und wobei in einem gegenüber dem ersten Zeitpunkt späteren zweiten Zeitpunkt die Berechtigungsinformation in einem zweiten Speicherbereich des zweiten Telekommunikationsendgeräts gespeichert ist oder die Berechtigung mit dem zweiten Telekommunikationsendgerät assoziiert ist,
wobei das erste Telekommunikationsendgerät neben der NFC-Schnittstelle eine erste Drahtlosschnittstelle aufweist und das zweite Telekommunikationsendgerät neben der NFC-Schnittstelle eine zweite Drahtlosschnittstelle aufweist, wobei zur Übertragung der Berechtigungsinformation vom ersten Telekommunikationsendgerät zum zweiten Telekommunikationsendgerät die erste und zweite Drahtlosschnittstelle verwendet wird oder zur Übertragung der Berechtigung wenigstens die erste Drahtlosschnittstelle verwendet wird, wobei das erste und zweite Telekommunikationsendgerät während der Übertragung der Berechtigungsinformation oder der Berechtigung einen die Reichweite der NFC-Schnittstelle übersteigenden Abstand voneinander aufweisen.

Es ist hierdurch gemäß der vorliegenden Erfindung in vorteilhafter Weise möglich, dass die Berechtigungsinformation bzw. die Berechtigung derart übertragen wird, dass mittels des zweiten Telekommunikationsendgerät der Dienst oder die Anwendung genutzt werden kann, die vor der Übertragung der Berechtigungsinformation bzw. der Berechtigung lediglich mit dem ersten Telekommunikationsendgerät verknüpft bzw. assoziiert war.

Beim erfindungsgemäßen Verfahren ist es primär vorgesehen, dass eine Berechtigungsinformation vom ersten Telekommunikationsendgerät zum zweiten Telekommunikationsendgerät übertragen wird. Entsprechend ist primär Gegenstand der vorliegenden Erfindung ein Verfahren zur Übertragung, über ein Telekommunikationsnetz, einer in einem Speicherbereich eines Telekommunikationsendgeräts gespeicherten und mittels einer NFC-Schnittstelle benutzbaren Berechtigungsinformation von einem ersten Telekommunikationsendgerät auf ein zweites Telekommunikationsendgerät, wobei in einem ersten Zeitpunkt die Berechtigungsinformation in einem ersten Speicherbereich des ersten Telekommunikationsendgeräts gespeichert ist und wobei in einem gegenüber dem ersten Zeitpunkt späteren zweiten Zeitpunkt die Berechtigungsinformation in einem zweiten Speicherbereich des zweiten Telekommunikationsendgeräts gespeichert ist, wobei das erste Telekommunikationsendgerät neben der NFC-Schnittstelle eine erste Drahtlosschnittstelle aufweist und das zweite Telekommunikationsendgerät neben der NFC-Schnittstelle eine zweite Drahtlosschnittstelle aufweist, wobei zur Übertragung der Berechtigungsinformation vom ersten Telekommunikationsendgerät zum zweiten Telekommunikationsendgerät die erste und zweite Drahtlosschnittstelle verwendet wird, wobei das erste und zweite Telekommunikationsendgerät während der Übertragung der Berechtigungsinformation einen die Reichweite der NFC-Schnittstelle übersteigenden Abstand voneinander aufweisen.

Weiterhin ist es jedoch beim erfindungsgemäßen Verfahren auch vorgesehen, dass eine mit einem Telekommunikationsendgerät assoziierte Berechtigung übertragen wird und zwar derart, dass die Berechtigung vor der Übertragung mit dem ersten Telekommunikationsendgerät assoziiert ist und nach der Übertragung zumindest auch (bzw. in Teilen bzw. für Teile der Berechtigung) mit dem zweiten Telekommunikationsendgerät assoziiert ist. Entsprechend ist Gegenstand der vorliegenden Erfindung auch ein Verfahren zur Übertragung, insbesondere über ein Telekommunikationsnetz, einer mit einem Telekommunikationsendgerät assoziierten und mittels einer NFC-Schnittstelle benutzbaren Berechtigung von einem ersten Telekommunikationsendgerät auf ein zweites Telekommunikationsendgerät (bzw. die Übertragung der entsprechenden Assoziierung), wobei in einem ersten Zeitpunkt die Berechtigung mit dem ersten Telekommunikationsendgerät assoziiert ist und wobei in einem gegenüber dem ersten Zeitpunkt späteren zweiten Zeitpunkt die Berechtigung mit dem zweiten Telekommunikationsendgerät assoziiert ist, wobei das erste Telekommunikationsendgerät neben der NFC-Schnittstelle eine erste Drahtlosschnittstelle aufweist (und das zweite Telekommunikationsendgerät typischerweise und insbesondere ebenfalls neben der NFC-Schnittstelle eine zweite Drahtlosschnittstelle aufweist), wobei zur Übertragung der Berechtigung wenigstens die erste Drahtlosschnittstelle verwendet wird, wobei das erste und zweite Telekommunikationsendgerät während der Übertragung der Berechtigungsinformation oder der Berechtigung einen die Reichweite der NFC-Schnittstelle übersteigenden Abstand voneinander aufweisen.

Gemäß der vorliegenden Erfindung sind daher mehrere Wege bzw. Arten der Übertragung der Berechtigungsinformation bzw. der Berechtigung möglich,
-- zum einen eine sogenannte "Peer-2-Peer"-Übertragung, d.h. die mehr oder weniger direkte (d.h. insbesondere nicht über eine Servereinrichtung vermittelte) Übertragung der Berechtigungsinformation bzw. der Berechtigung (d.h. insbesondere der Anwendung(sdaten) bzw. der Applikation und/oder der dazugehörigen Zugangsdaten) vom ersten Telekommunikationsendgerät zum zweiten Telekommunikationsendgerät,
-- weiterhin eine sogenannte "Client-Server"-Übertragung, d.h. es wird die Berechtigungsinformation bzw. die Berechtigung (d.h. insbesondere die Anwendung(sdaten) bzw. die Applikation und/oder die dazugehörigen Zugangsdaten) vom ersten Telekommunikationsendgerät zur Servereinrichtung übertragen und es wird (insbesondere durch die sendende Anwendung bzw. Applikation und insbesondere gemäß den Regeln der zugehörigen Kategorie) dafür gesorgt (insbesondere mittels eines entsprechenden Befehls an die Servereinrichtung), dass die Übertragung durch die Servereinrichtung (bzw. durch das externe System des Diensteanbieters (SP-Backend)) auf das zweite Telekommunikationsendgerät getriggert wird und die Berechtigungsinformation bzw. die Berechtigung (d.h. insbesondere die Applikation mit den dazugehörigen Zugangsdaten) in das Zielgerät, d.h. zum zweiten Telekommunikationsendgerät, übertragen wird; und
-- schließlich die Übertragung der Berechtigung (in Form einer Änderung der Assoziierung der Berechtigung vom ersten Telekommunikationsendgerät zum zweiten Telekommunikationsendgerät) durch eine Änderung der Zuordnung in der Servereinrichtung (d.h. im Backend System des Diensteanbieters), wobei kein Transfer bzw. keine Übertragung der Zugangsdaten (vom ersten Telekommunikationsendgerät zum zweiten Telekommunikationsendgerät) stattfindet, sondern lediglich die entsprechende Zuordnung in der Servereinrichtung umgestellt wird.

Für den Fall, dass im (ersten bzw. zweiten) Telekommunikationsendgerät die Berechtigungsinformation gespeichert ist, ist es erfindungsgemäß bevorzugt vorgesehen, dass die Berechtigungsinformation im ersten Telekommunikationsendgerät in einem ersten sicheren Element (SE, secure element) gespeichert ist, in dem sich auch der erste Speicherbereich befindet und dass die Berechtigungsinformation im zweiten Telekommunikationsendgerät in einem zweiten sicheren Element gespeichert ist, in dem sich auch der zweite Speicherbereich befindet, wobei das erste und zweite sichere Element insbesondere ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) oder ein integrierter Schaltkreis ist.

Hierdurch ist es erfindungsgemäß vorteilhaft möglich, dass das Sicherheitsniveau einer NFC-Anwendung bzw. eines entsprechenden Dienstes nicht durch die Übertragung der Berechtigungsinformation gemäß der vorliegenden Erfindung herabgesetzt wird, sondern dass im Gegenteil das Sicherheitsniveau gleichbleibend - etwa gegenüber einer Übertragung über die NFC-Schnittstelle von einem Telekommunikationsendgerät zu einem anderen Telekommunikationsendgerät - oder, jedenfalls für praxisrelevante Fälle, lediglich unwesentlich demgegenüber vermindert ist.

Erfindungsgemäß ist es vorgesehen, dass sowohl das erste Telekommunikationsendgerät als auch das zweite Telekommunikationsendgerät sowohl eine NFC-Schnittstelle als auch eine Drahtlosschnittstelle aufweist (d.h. das erste Telekommunikationsendgerät weist die erste Drahtlosschnittstelle und das zweite Telekommunikationsendgerät weist die zweite Drahtlosschnittstelle auf). Bei dem erfindungsgemäßen Verfahren und auch beim erfindungsgemäßen Telekommunikationsendgerät und dem erfindungsgemäßen System findet eine Informationsübertragung zumindest zwischen dem ersten Telekommunikationsendgerät und einer Servereinrichtung (in der Regel des Dienstanbieters des Dienstes bzw. der Anwendung, welche von einem Nutzer mittels des ersten bzw. zweiten Telekommunikationsendgerät genutzt werden soll) statt. Diese Informationsübertragung (hinsichtlich der Berechtigungsinformation oder hinsichtlich der (mit dem Telekommunikationsendgerät assoziierten) Berechtigung) zwischen zumindest dem ersten Telekommunikationsendgerät und der Servereinrichtung erfolgt erfindungsgemäß über die Drahtlosschnittstelle (d.h. über die erste Drahtlosschnittstelle bei der Kommunikation zwischen dem ersten Telekommunikationsendgerät und der Servereinrichtung (bezüglich der Berechtigungsinformation oder bezüglich der Berechtigung) bzw. über die erste und zweite Drahtlosschnittstelle bei der Kommunikation zwischen dem ersten Telekommunikationsendgerät und dem zweiten Telekommunikationsendgerät (bezüglichder Berechtigungsinformation). Bei der (ersten bzw. zweiten) Drahtlosschnittstelle handelt es sich erfindungsgemäß insbesondere um eine drahtlose vergleichsweise kurzreichweitige Funkschnittstelle wie beispielsweise eine lokale Funkschnittstelle - etwa eine WLAN-Funkschnittstelle (Wireless Local Area Network) oder auch eine Bluetooth-Funkschnittstelle - oder aber um eine Weitverkehrsfunkschnittstelle (WWAN, Wireless Wide Area Network) - etwa eine herkömmliche Mobilfunkschnittstelle (des ersten bzw. zweiten Telekommunikationsendgeräts), insbesondere gemäß einem der bekannten Standards, d.h. beispielsweise gemäß dem GSM-(Global System for Mobile communication)-Standard (Mobilfunkschnittstelle der zweiten Generation) und/oder gemäß dem UMTS-(Universal Mobile Telecommunication System)-Standard (Mobilfunkschnittstelle der dritten Generation) und/oder gemäß dem EDGE-(Enhanced Data Rates for GSM Evolution)-Standard und/oder gemäß dem LTE-(Long Term Evolution)-Standard (Mobilfunkschnittstelle der vierten Generation). Die (erste und zweite) Drahtlosschnittstelle kann erfindungsgemäß alternativ auch derart ausgebildet sein, dass sie sowohl eine kurzreichweitige Funkschnittstelle als auch eine Weitverkehrsfunkschnittstelle aufweist (entweder mittels der Verwendung von integrierten Bauelementen bzw. Antennenanordnungen oder aber mittels der Verwendung unterschiedlicher Baugruppen, einerseits für die kurzreichweitige Funkschnittstelle und andererseits für die Weitverkehrsfunkschnittstelle), die insbesondere auch parallel betreibbar sind.

Gemäß der vorliegenden Erfindung ist es vorgesehen, dass sowohl das erste Telekommunikationsendgerät als auch das zweite Telekommunikationsendgerät über eine NFC-Schnittstelle verfügt und in der Lage ist, über die NFC-Schnittstelle Informationen zur Nutzung von Diensten bzw. Anwendungen (mit entsprechenden Gegenstellen in Form von NFC-Terminals oder dergleichen) auszutauschen. Erfindungsgemäß ist die NFC-Schnittstelle (sowohl des ersten Telekommunikationsendgeräts als auch des zweiten Telekommunikationsendgeräts derart konzipiert, dass sie für generelle NFC basierte Applikationen, für MiFare-Anwendungen, für Calypso-Anwendungen oder jedes andere Identifikations- oder Berechtigungsmanagementsystem auf der Grundlage von NFC (d.h. typischerweise mit sicheren Zugangsdaten/Schlüsseln im Gerät, dem SE (sicheren Element) oder in einem (externen) Backupsystem (bzw. einer Servereinrichtung) funktioniert.

Gemäß der vorliegenden Erfindung wird der Nachteil des Standes der Technik beseitigt, wonach eine Übertragung der Berechtigungsinformation (bzw. eine Übertragung einer mit einem Telekommunikationsendgerät assoziierten Berechtigung) vom ersten Telekommunikationsendgerät zum zweiten Telekommunikationsendgerät über eine über die Reichweite der NFC-Schnittstelle hinausgehende Distanz nicht vorgesehen ist. Hierzu ist vorgesehen, dass in den Telekommunikationsendgeräten, d.h. in den mobilen Geräten (und hier insbesondere innerhalb des sicheren Elements SE des ersten bzw. des zweiten Telekommunikationsendgeräts), und auch in der (bezüglich der Telekommunikationsendgeräte externen) Servereinrichtung (bzw. im Backend System) Mittel vorhanden sind, die es erlauben, eine Berechtigungsinformation bzw. eine Berechtigung (insbesondere in Form einer den bezüglich der Übertagung nachgefragten Diensten bzw. Anwendungen entsprechende Applikation mit den dazugehörigen Schlüsseln/Zugangsdaten) vom ersten Telekommunikationsendgerät zum zweiten Telekommunikationsendgerät zu übertragen (bzw. zumindest die Assoziierung vom ersten Telekommunikationsendgerät zum zweiten Telekommunikationsendgerät zu übertragen), wobei diese Übertragung erfindungsgemäß insbesondere derart gesichert vorgenommen wird, dass entweder ein gleich hohes Sicherheitsniveau gegenüber einer Übertragung unter Nutzung der NFC-Schnittstelle (d.h. insbesondere vom ersten Telekommunikationsendgerät direkt zum zweiten Telekommunikationsendgerät) erreicht wird oder aber zumindest ein Sicherheitsniveau welches nicht wesentlich darunter liegt.

Erfindungsgemäß ist es zum Beispiel möglich, die Berechtigungsinformation vom ersten Telekommunikationsendgerät zum zweiten Telekommunikationsendgerät zu übertragen, obwohl das erste und zweite Telekommunikationsendgerät mehrere Meter (beispielsweise innerhalb eines Hauses oder Gebäudes) entfernt voneinander platziert sind.

Erfindungsgemäß ist es bevorzugt, dass das erste und zweite Telekommunikationsendgerät während der Übertragung der Berechtigungsinformation oder der Berechtigung einen die Reichweite eines lokalen Drahtlosnetzwerkes (WLAN, Wireless Local Area Network) übersteigenden Abstand voneinander aufweisen.

Hierdurch ist es erfindungsgemäß beispielsweise möglich, die Berechtigungsinformation vom ersten Telekommunikationsendgerät zum zweiten Telekommunikationsendgerät zu übertragen, obwohl das erste und zweite Telekommunikationsendgerät mehrere hundert Meter oder auch mehrere Kilometer (bis zu mehreren hundert oder mehreren tausend Kilometer), beispielsweise innerhalb einer Stadt oder innerhalb eines Landes oder auf unterschiedlichen Kontinenten, entfernt voneinander platziert sind.

Erfindungsgemäß ist es ferner bevorzugt, dass die Übertragung der Berechtigungsinformation oder der Assoziierung der Berechtigung vom ersten Telekommunikationsendgerät zum zweiten Telekommunikationsendgerät den Benutzer des zweiten Telekommunikationsendgeräts entweder:
-- anstelle des Benutzers des ersten Telekommunikationsendgeräts oder
-- zusätzlich zum Benutzer des ersten Telekommunikationsendgeräts zur Nutzung eines Dienstes oder einer Sache berechtigt.

Hierdurch ist es erfindungsgemäß vorteilhaft möglich, dass, insbesondere abhängig von der Kategorie der (mit der Berechtigungsinformation bzw. der Berechtigung verknüpften) Applikation(en), die erfindungsgemäße Übertragung vom ersten Telekommunikationsendgerät zum zweiten Telekommunikationsendgerät in verschiedenen Betriebsarten zu betreiben, wie beispielsweise "copy and paste" (d.h. zusätzlich zum Benutzer des ersten Telekommunikationsendgeräts ist der Benutzer am zweiten Telekommunikationsendgerät zur Nutzung eines Dienstes oder einer Sache berechtigt) - etwa für Anwendungen der Zugangskontrolle, einer Bezahlfunktionen oder dergleichen - oder auch "cut and paste" (d.h. anstelle des Benutzers des ersten Telekommunikationsendgeräts ist der Benutzer des zweiten Telekommunikationsendgeräts zur Nutzung eines Dienstes oder einer Sache berechtigt) - etwa für Anwendungen von Loyalitätspunkten (loyalty Punkte), von Veranstaltungstickets, von bestimmten Tickets des öffentlichen (Personen)Verkehrs (Nahverkehr und/oder Fernverkehr).

Es ist ferner erfindungsgemäß bevorzugt, dass die Übertragung der Berechtigungsinformation oder der Assoziierung der Berechtigung vom ersten Telekommunikationsendgerät zum zweiten Telekommunikationsendgerät den Benutzer des zweiten Telekommunikationsendgeräts
-- für die Dauer eines vorbestimmten Zeitintervalls oder
-- innerhalb eines vorbestimmten geographischen Bereichs oder
-- für eine Kombination aus einer zeitlichen und einer geographischen Bedingung zur Nutzung eines Dienstes oder einer Sache berechtigt.

Somit ist es erfindungsgemäß vorteilhaft möglich, dass weitere Bedingungen gesetzt werden können, wie beispielsweise die Übertragbarkeit der Applikation und der Zugangsdaten und eventuelle Nutzungsbeschränkungen (insbesondere zeitliche bzw. örtliche) nach der Übertragung. Diese Bedingungen können erfindungsgemäß beispielsweise vom Diensteanbieter (Service Provider), der der Herausgeber des Dienstes (bzw. des Services) oder der Anwendung (bzw. der Applikation) ist, gesetzt werden - beispielhaft könnte ein Nahverkehrsticket kann lediglich bis zu einer bestimmten Anzahl von Übertragungsvorgängen (beispielsweise 10 mal) übertragen werden. Alternativ oder kumulativ dazu können diese (die Nutzung der Berechtigungsinformation bzw. der Berechtigung durch den Nutzer des zweiten Telekommunikationsendgeräts einschränkenden) Bedingungen erfindungsgemäß auch vom Nutzer des ersten Telekommunikationsendgeräts (d.h. in der Regel des Kunden des Diensteanbieters, welcher den Dienst bzw. die Anwendung (Service/Applikation) ursprünglich erworben bzw. bezahlt hat) eingeschränkt werden - beispielhaft könnte eine befreundete Person (als Nutzer des zweiten Telekommunikationsendgeräts) lediglich an einem bestimmten Wochenende ein Kraftfahrzeug Auto benutzen oder auch einen bestimmten Betrag auf einer Geldkarte erhalten.

Erfindungsgemäß ist es ferner auch bevorzugt, dass das erste sichere Element zur Übertragung der Berechtigungsinformation eine erste Übertragungsschnittstelle aufweist und das zweite sichere Element zur Übertragung der Berechtigungsinformation eine zweite Übertragungsschnittstelle aufweist, wobei die Berechtigungsinformation über die erste und zweite Übertragungsschnittstelle unter Benutzung eines Übertragungskanals transparent übertragen wird, insbesondere in geschützter, insbesondere verschlüsselter, Form.

Hierdurch ist es erfindungsgemäß vorteilhaft möglich, dass zum einen hohes Maß an Sicherheit bei der Übertragung der Berechtigungsinformation bzw. der Berechtigung erreicht wird und andererseits auch ein großes Maß an Modularität dahingehend, dass ein beliebige Anwendung - insbesondere innerhalb des (ersten bzw. zweiten) sicheren Elements gemäß dem erfindungsgemäßen Verfahren übertragen werden kann bzw. die damit in Beziehung stehende Berechtigungsinformation bzw. Berechtigung übertragen werden kann.

Ferner ist es erfindungsgemäß auch bevorzugt, dass als Berechtigungsinformation
-- sowohl Informationen bezüglich einer innerhalb des ersten und/oder des zweiten sicheren Elements genutzten oder zu nutzenden und an der Übertragung beteiligten Anwendung
-- als auch vertrauliche und geschützte, mit der an der Übertragung beteiligten Anwendung verbundene Informationen (credential informations)
übertragen werden.

Hierdurch ist es erfindungsgemäß vorteilhaft möglich, dass eine besonders einfache Übertragung der Berechtigungsinformation bzw. der Berechtigung möglich ist, weil die für die Nutzung des nachgefragten Dienstes oder der Anwendung vom zweiten Telekommunikationsendgerät aus notwendigen Informationen nicht nur hinsichtlich der vertraulichen und geschützten, mit der an der Übertragung beteiligten Anwendung verbundene Informationen (credential informations), sondern auch Informationen bezüglich der innerhalb des ersten und/oder des zweiten sicheren Elements genutzten oder zu nutzenden und an der Übertragung beteiligten Anwendung übertragen werden. Hierdurch ist beispielsweise automatisch sichergestellt, dass es nicht durch unterschiedliche Versionsstände der benutzten und an der Übertragung beteiligten Anwendung zu Einschränkungen der Benutzbarkeit des Dienstes oder der Anwendung beim zweiten Telekommunikationsendgerät bzw. durch den Benutzer des zweiten Telekommunikationsendgeräts kommt.

Ein weiterer Gegenstand der vorliegenden Erfindung betrifft ein Telekommunikationsendgerät, gemäß Anspruch 7, mit einer NFC-Schnittstelle (Near Field Communication Schnittstelle) und einer ersten Drahtlosschnittstelle zur Übertragung
-- einer in einem Speicherbereich des Telekommunikationsendgeräts gespeicherten und mittels einer NFC-Schnittstelle (Near Field Communication Schnittstelle) benutzbaren Berechtigungsinformation oder
-- einer mit dem Telekommunikationsendgerät assoziierten und mittels einer NFC-Schnittstelle benutzbaren Berechtigung vom Telekommunikationsendgerät auf ein zweites Telekommunikationsendgerät,
wobei das Telekommunikationsendgerät derart konfiguriert ist, die Berechtigungsinformation in einem ersten Speicherbereich des Telekommunikationsendgeräts zu speichern, wobei das Telekommunikationsendgerät zur Übertragung der Berechtigungsinformation vom Telekommunikationsendgerät zum zweiten Telekommunikationsendgerät unter Benutzung der ersten Drahtlosschnittstelle konfiguriert ist, wobei das Telekommunikationsendgerät und das zweite Telekommunikationsendgerät während der Übertragung der Berechtigungsinformation einen die Reichweite der NFC-Schnittstelle übersteigenden Abstand voneinander aufweisen.

Mittels eines solchen Telekommunikationsendgeräts ist es erfindungsgemäß in vorteilhafter Weise möglich, dass die Berechtigungsinformation bzw. die Berechtigung derart übertragen wird, dass mittels des zweiten Telekommunikationsendgerät der Dienst oder die Anwendung genutzt werden kann, die vor der Übertragung der Berechtigungsinformation bzw. der Berechtigung lediglich mit dem ersten Telekommunikationsendgerät verknüpft bzw. assoziiert war, wobei die Telekommunikationsendgeräte mindestens mehrere Meter voneinander entfernt sind, d.h. einen die Reichweite der NFC-Schnittstelle übersteigenden Abstand voneinander aufweisen.

Erfindungsgemäß ist es ebenfalls bezüglich des Telekommunikationsendgeräts besonders bevorzugt, dass die Berechtigungsinformation im ersten Telekommunikationsendgerät in einem ersten sicheren Element gespeichert ist, in dem sich auch der erste Speicherbereich befindet, wobei das erste sichere Element insbesondere ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) oder ein integrierter Schaltkreis ist.

Durch die Verwendung von sicheren Elementen (SE) sowohl im ersten Telekommunikationsendgerät als auch im zweiten Telekommunikationsendgerät kann erfindungsgemäß trotz der Übertragung der Berechtigungsinformation bzw. der Berechtigung ein ausreichend hohes Sicherheitsniveau, insbesondere gegenüber Datendiebstahl bzw. betrügerischen Aktionen zur unrechtmäßigen Erlangung von Diensten bzw. von Zahlungsmitteln, bei vertretbarem Aufwand realisiert werden.

Ferner ist es erfindungsgemäß bezüglich des Telekommunikationsendgeräts besonders bevorzugt, dass das erste sichere Element zur Übertragung der Berechtigungsinformation eine erste Übertragungsschnittstelle aufweist, wobei die Berechtigungsinformation über die erste Übertragungsschnittstelle unter Benutzung eines Übertragungskanals transparent übertragen wird, insbesondere in geschützter, insbesondere verschlüsselter, Form, wobei das Telekommunikationsendgerät insbesondere derart konfiguriert ist, dass als Berechtigungsinformation
-- sowohl Informationen bezüglich einer innerhalb des ersten und/oder des zweiten sicheren Elements genutzten oder zu nutzenden und an der Übertragung beteiligten Anwendung
-- als auch vertrauliche und geschützte, mit der an der Übertragung beteiligten Anwendung verbundene Informationen (credentials informations)
übertragen werden.

Ein weiterer Gegenstand der vorliegenden Erfindung betrifft ein System gemäß Anspruch 10, umfassend ein erstes Telekommunikationsendgerät und ein zweites Telekommunikationsendgerät, zur Übertragung über ein Telekommunikationsnetz
-- einer in einem Speicherbereich eines Telekommunikationsendgeräts gespeicherten und mittels einer NFC-Schnittstelle (Near Field Communication Schnittstelle) benutzbaren Berechtigungsinformation oder
-- einer mit einem Telekommunikationsendgerät assoziierten und mittels einer NFC-Schnittstelle benutzbaren Berechtigung
von dem ersten Telekommunikationsendgerät auf das zweite Telekommunikationsendgerät,
wobei das System derart konfiguriert ist, die Berechtigungsinformation in einem ersten Speicherbereich des ersten Telekommunikationsendgeräts zu speichern oder die Berechtigung mit dem ersten Telekommunikationsendgerät zu assoziieren und/oder wobei das System derart konfiguriert ist, die Berechtigungsinformation in einem zweiten Speicherbereich des zweiten Telekommunikationsendgeräts zu speichern oder die Berechtigung mit dem zweiten Telekommunikationsendgerät zu assoziieren,
wobei das erste Telekommunikationsendgerät neben der NFC-Schnittstelle eine erste Drahtlosschnittstelle aufweist und das zweite Telekommunikationsendgerät neben der NFC-Schnittstelle eine zweite Drahtlosschnittstelle aufweist, wobei das System zur Übertragung der Berechtigungsinformation vom ersten Telekommunikationsendgerät zum zweiten Telekommunikationsendgerät unter Benutzung der ersten und zweiten Drahtlosschnittstelle konfiguriert ist oder zur Übertragung der Berechtigung unter Benutzung wenigstens der ersten Drahtlosschnittstelle konfiguriert ist, wobei das System derart konfiguriert ist, dass das erste und zweite Telekommunikationsendgerät bei der Übertragung der Berechtigungsinformation oder der Berechtigung einen die Reichweite der NFC-Schnittstelle übersteigenden Abstand voneinander aufweisen.

Mittels eines solchen Systems ist es erfindungsgemäß in vorteilhafter Weise möglich, dass die Berechtigungsinformation bzw. die Berechtigung zur Nutzung des Dienstes oder der Anwendung mittels des zweiten Telekommunikationsendgeräts vom ersten Telekommunikationsendgerät aus übertragbar ist, wobei die Telekommunikationsendgeräte mindestens mehrere Meter voneinander entfernt sind, d.h. einen die Reichweite der NFC-Schnittstelle übersteigenden Abstand voneinander aufweisen.

Erfindungsgemäß ist es bezüglich des Systems besonders bevorzugt, dass dass die Berechtigungsinformation im ersten Telekommunikationsendgerät in einem ersten sicheren Element (SE, secure element) gespeichert ist, in dem sich auch der erste Speicherbereich befindet und dass die Berechtigungsinformation im zweiten Telekommunikationsendgerät in einem zweiten sicheren Element gespeichert ist, in dem sich auch der zweite Speicherbereich befindet, wobei das erste und zweite sichere Element insbesondere ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) ist.

Die Verwendung von sicheren Elementen (SE) sowohl im ersten Telekommunikationsendgerät als auch im zweiten Telekommunikationsendgerät ermöglicht es, trotz der Übertragung der Berechtigungsinformation bzw. der Berechtigung ein ausreichend hohes Sicherheitsniveau, insbesondere gegenüber Datendiebstahl bzw. betrügerischen Aktionen zur unrechtmäßigen Erlangung von Diensten bzw. von Zahlungsmitteln, bei vertretbarem Aufwand zu erreichen.

Ferner bezieht sich die vorliegende Erfindung auch auf ein Computerprogramm, gemäß Anspruch 12, mit Programmcodemitteln, mit deren Hilfe alle Schritte des erfindungsgemäßen Verfahrens durchführbar sind, wenn das Computerprogramm auf einer programmierbaren Einrichtung ausgeführt wird.

Weiterhin ist Gegenstand der vorliegenden Erfindung ein Computerprogrammprodukt, gemäß Anspruch 13, mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung, insbesondere als Teil des Systems, oder auf dem ersten oder zweiten Telekommunikationsendgerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken. Die Erfindung wird durch die beiliegenden unabhängigen Ansprüche und deren abhängige Ansprüche definiert.

### Kurze Beschreibung der Zeichnungen

- **Figur 1**: zeigt schematisch eine erste Variante eines erfindungsgemäßen Verfahrens.
- **Figur 2**: zeigt schematisch eine zweite Variante des erfindungsgemäßen Verfahrens.
- **Figur 3**: zeigt schematisch ein erfindungsgemäßes System mit einem ersten und einem zweiten Telekommunikationsendgerät.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

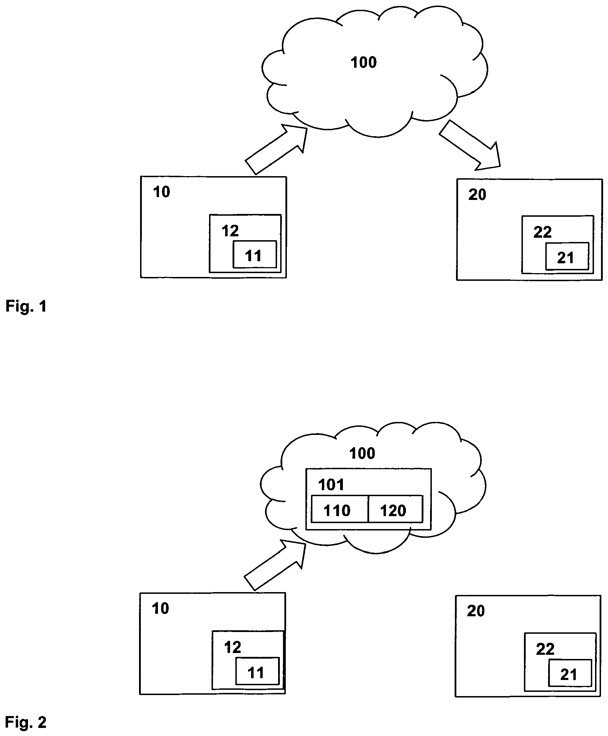

In Figur 1 ist schematisch eine erste Variante eines erfindungsgemäßen Verfahrens dargestellt. Das erfindungsgemäße Verfahren dient gemäß der ersten Variante des erfindungsgemäßen Verfahrens der Übertragung, über ein Telekommunikationsnetz 100, einer in einem Speicherbereich eines Telekommunikationsendgeräts gespeicherten und mittels einer NFC-Schnittstelle (Near Field Communication Schnittstelle) benutzbaren Berechtigungsinformation von einem ersten Telekommunikationsendgerät 10 auf ein zweites Telekommunikationsendgerät 20.

Das erste Telekommunikationsendgerät 10 weist hierzu erfindungsgemäß insbesondere ein erstes sicheres Element 12 auf und das zweite Telekommunikationsendgerät 20 weist hierzu erfindungsgemäß insbesondere ein zweites sicheres Element 22 auf. Innerhalb des ersten Telekommunikationsendgeräts 10 ist ein erster Speicherbereich 11 zur Speicherung der Berechtigungsinformation vorgesehen, wobei der erste Speicherbereich 11 insbesondere innerhalb des ersten sicheren Elements 12 vorgesehen ist. Gleichfalls ist innerhalb des zweiten Telekommunikationsendgeräts 20 ist ein zweiter Speicherbereich 21 zur Speicherung der Berechtigungsinformation vorgesehen, wobei der zweite Speicherbereich 21 insbesondere innerhalb des zweiten sicheren Elements 22 vorgesehen ist.

Das erste Telekommunikationsendgerät 10 weist erfindungsgemäß neben der bzw. "seiner" NFC-Schnittstelle eine erste Drahtlosschnittstelle auf und das zweite Telekommunikationsendgerät 20 ebenfalls neben der bzw. "seiner" NFC-Schnittstelle eine zweite Drahtlosschnittstelle auf. Zur Übertragung der Berechtigungsinformation vom ersten Telekommunikationsendgerät 10 zum zweiten Telekommunikationsendgerät 20 wird gemäß der ersten Variante des erfindungsgemäßen Verfahrens die erste und zweite Drahtlosschnittstelle verwendet, wobei das erste und zweite Telekommunikationsendgerät 10, 20 während der Übertragung der Berechtigungsinformation einen die Reichweite der NFC-Schnittstelle übersteigenden Abstand voneinander aufweisen, d.h. eine direkte Übertragung der Berechtigungsinformation unter Nutzung der NFC-Schnittstelle scheidet aus. Es findet hierbei entweder eine direkte Kommunikation bzw. Übertragung der Berechtigungsinformation vom ersten Telekommunikationsendgerät 10 zum zweiten Telekommunikationsendgerät 20 statt oder aber es findet eine Übertragung der Berechtigungsinformation vom ersten Telekommunikationsendgerät 10 auf die Servereinrichtung statt und nachfolgend eine Übertragung der Berechtigungsinformation von der Servereinrichtung zum zweiten Telekommunikationsendgerät 20 statt. Beide Unterfälle sollen als durch die beiden Pfeildarstellungen in Figur 1 angedeutet dargestellt sein.

Erfindungsgemäß ist damit im Ergebnis in einem ersten Zeitpunkt die Berechtigungsinformation im ersten Speicherbereich 11 des ersten Telekommunikationsendgeräts 10 gespeichert ist und in einem gegenüber dem ersten Zeitpunkt späteren zweiten Zeitpunkt die Berechtigungsinformation im zweiten Speicherbereich 21 des zweiten Telekommunikationsendgeräts 20 gespeichert, wodurch ein Dienst bzw. eine Anwendung auch am zweiten Telekommunikationsendgerät 20 bzw. für dessen Nutzer zugänglich bzw. nutzbar ist.

In Figur 2 ist schematisch eine zweite Variante des erfindungsgemäßen Verfahrens dargestellt.

Das erfindungsgemäße Verfahren gemäß der zweiten Variante dient der Übertragung, insbesondere über ein Telekommunikationsnetz 100, einer mit einem Telekommunikationsendgerät assoziierten und mittels einer NFC-Schnittstelle benutzbaren Berechtigung vom ersten Telekommunikationsendgerät 10 auf das zweite Telekommunikationsendgerät 20.

Das erste Telekommunikationsendgerät 10 weist hierzu entsprechend der ersten Variante insbesondere ein erstes sicheres Element 12 auf und das zweite Telekommunikationsendgerät 20 weist hierzu entsprechend der ersten Variante ebenfalls insbesondere ein zweites sicheres Element 22 auf. Typischerweise ist auch gemäß der zweiten Variante innerhalb des ersten Telekommunikationsendgeräts 10 ist ein erster Speicherbereich 11 zur Speicherung einer Berechtigungsinformation vorgesehen, wobei der erste Speicherbereich 11 insbesondere innerhalb des ersten sicheren Elements 12 vorgesehen ist. Gleichfalls ist auch bei der zweiten Varainte innerhalb des zweiten Telekommunikationsendgeräts 20 typischerweise ein zweiter Speicherbereich 21 zur Speicherung der Berechtigungsinformation vorgesehen, wobei der zweite Speicherbereich 21 insbesondere innerhalb des zweiten sicheren Elements 22 vorgesehen ist.

Auch bei der zweiten Variante weist das erste Telekommunikationsendgerät 10 erfindungsgemäß neben der bzw. "seiner" NFC-Schnittstelle eine erste Drahtlosschnittstelle auf und das zweite Telekommunikationsendgerät 20 ebenfalls neben der bzw. "seiner" NFC-Schnittstelle eine zweite Drahtlosschnittstelle auf. Zur Übertragung der Berechtigung wird bei der zweiten Variante wenigstens die erste Drahtlosschnittstelle verwendet, wobei das erste und zweite Telekommunikationsendgerät 10, 20 während der Übertragung der Berechtigung einen die Reichweite der NFC-Schnittstelle übersteigenden Abstand voneinander aufweisen, d.h. eine direkte Übertragung der Berechtigungsinformation unter Nutzung der NFC-Schnittstelle scheidet aus.

Erfindungsgemäß ist in einem ersten Zeitpunkt die Berechtigung mit dem ersten Telekommunikationsendgerät 10 assoziiert und in einem gegenüber dem ersten Zeitpunkt späteren zweiten Zeitpunkt die Berechtigung mit dem zweiten Telekommunikationsendgerät 20 assoziiert ist, wodurch ein Dienst bzw. eine Anwendung auch am zweiten Telekommunikationsendgerät 20 bzw. für dessen Nutzer zugänglich bzw. nutzbar ist. Es findet hierbei nicht zwingend eine direkte Kommunikation bzw. Übertragung einer Information vom ersten Telekommunikationsendgerät 10 zum zweiten Telekommunikationsendgerät 20 statt, sondern es wird eine Assoziierung, entsprechend beispielsweise einem Zeiger oder eines Verweises in einer Servereinrichtung 101 derart geändert, dass - bezüglich der Nutzung eines Dienstes oder einer Anwendung - ein erster Zeiger oder ein erster Verweis 110 bzw. eine Assoziierung, die im ersten Zeitpunkt mit dem ersten Telekommunikationsendgerät 10 bestand, im zweiten Zeitpunkt einen zweiten Zeiger oder einen zweiten Verweis 120 bzw. eine Assoziierung mit dem zweiten Telekommunikationsendgerät 20 aufweist. Zwingend erforderlich hierfür ist lediglich eine Informationsübertragung vom ersten Telekommunikationsendgerät 10 zur Servereinrichtung 101, was in Figur 2 mittels eines Pfeils angedeutet ist. Eine der in Figur 2 dargestellten Servereinrichtung 101 entsprechende Servereinrichtung ist typischerweise auch bei der ersten Variante des Verfahrens vorhanden, insbesondere als Teil des Telekommunikationsnetzes 100 bzw. mit diesem verbunden.

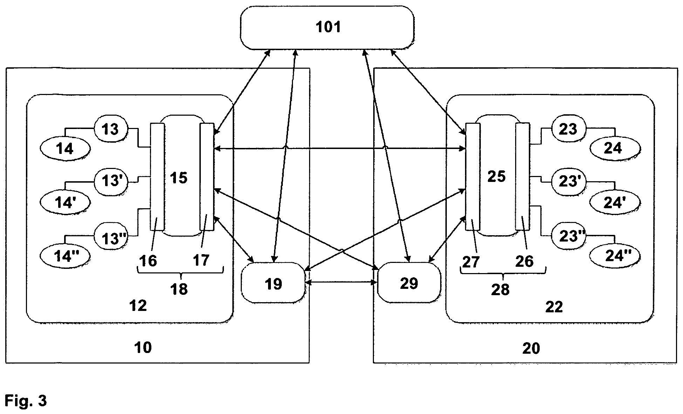

In Figur 3 ist schematisch ein erfindungsgemäßes System mit einem ersten Telekommunikationsendgerät 10, einem zweiten Telekommunikationsendgerät 20 und einer Servereinrichtung 101 dargestellt. Das erste Telekommunikationsendgerät 10 weist ein erstes sicheres Element 12 auf und das zweite Telekommunikationsendgerät 20 weist ein zweites sichers Element 22 auf.

Bei dem ersten bzw. zweiten Telekommunikationsendgerät 10, 20 kann es sich erfindungsgemäß um jedwedes "persönliches Gerät" handeln, insbesondere mobile Telefone und andere tragbare Geräte, die mit einer NFC-Schnittstelle (Near Field Communication Schnittstelle) und damit auch mit NFC-Fähigkeiten - etwa Rechner mit berührungsempfindlichen Bildschirmen (sog. Tablet Computer), PDAs (Persönliche Digitale Assistenten) - ausgestattet sind. Innerhalb des ersten und zweiten Telekommunikationsendgeräts 10, 20 (bzw. mit diesem verbunden) befindet sich ein sicheres Element sowie Anwendungen, die im Zusammenhang mit dem sicheren Element beuntzbar sind. Die sicheren Element sind typischerweise in zertifizierten und manipulationssicheren Hardwareelementen (des ersten bzw. zweiten Telekommunikationsendgeräts) untergebracht, die vor unbefugtem Zugriff geschützt sind. Diese "Secure Elements" können erfindungsgemäß eingebaute oder eingesteckte Elemente sein, insbesondere in Form von UICC-IDs, micro-SDs, festverbaute ICC, oder dergleichen, die insbesondere gängige Industriestandards, wie GP (GlobalPlatform), ISO, o.ä. verwenden oder mit diesen kompatibel sind. Die Anwendungsdaten sowie die vertraulichen und geschützten, mit der an der Übertragung beteiligten Anwendung verbundenen Informationen (credential informations) werden nachfolgend auch als sensitive Daten bezeichnet.

Die sensitive Daten, die in den sicheren Elementen (bzw. "Secure Elements") gespeichert sind, können externen Geräten bzw. Einheiten durch eine oder eine Gruppe von Anwendungen zugänglich gemacht werden, die in dem "Secure Element", zusammen mit diesen, installiert sind. Dieser Zugang erfolgt durch verschiedene Arten von Schnittstellen, wie contacted I/O, SWP, CAT oder ähnliche. Entsprechend weist das erste sichere Element 12 gemäß der beispielhaften Darstellung in Figur 3 eine erste Anwendung 13 mit zugehörigen vertraulichen und zu schützenden ersten Daten 14, eine zweite Anwendung 13' mit zugehörigen vertraulichen und zu schützenden zweiten Daten 14' und eine dritte Anwendung 13" mit zugehörigen vertraulichen und zu schützenden dritten Daten 14" auf. Hierbei stehen die erste, zweite und dritte Anwendung 13, 13', 13" für eine beliebige Anzahl solcher Anwendungen des ersten sicheren Elements 12 und entsprechen die ersten, zweiten und dritten Daten 14, 14', 14" für eine beliebige Anzahl zugehöriger vertraulicher und zu schützender Daten. Das zweite sichere Element 22 weist gemäß der beispielhaften Darstellung in Figur 3 eine vierte Anwendung 23 mit zugehörigen vertraulichen und zu schützenden vierten Daten 24, eine fünfte Anwendung 23' mit zugehörigen vertraulichen und zu schützenden fünften Daten 24' und eine sechste Anwendung 23" mit zugehörigen vertraulichen und zu schützenden sechsten Daten 24" auf. Hierbei stehen die vierte, fünfte und sechste Anwendung 23, 23', 23" für eine beliebige Anzahl solcher Anwendungen des zweiten sicheren Elements 22 und entsprechen die vierten, fünften und sechsten Daten 24, 24', 24" für eine beliebige Anzahl zugehöriger vertraulicher und zu schützender Daten.

Erfindungsgemäß ist es vorgesehen, solche vertrauliche und zu schützende Daten zwischen dem ersten sicheren Element 12 und dem zweiten sicheren Element 22 (oder auch zwischen dem ersten sicheren Element 12 und einem externen System wie der Servereinrichtung 101 zu übertragen, wobei das erste und zweite Telekommunikationsendgerät 10, 20 während der Übertragung der vertraulichen und zu schützenden Daten, d.h. während der Übertragung der Berechtigungsinformation, einen die Reichweite der NFC-Schnittstelle übersteigenden Abstand (von entsprechend wenigstens mehreren Metern) voneinander aufweisen bzw. einen noch weit darüberhinausgehenden größeren Abstand von mehreren Kilometern bis mehreren hundert oder tausend Kilometern aufweisen.

Hierzu weist das in Figur 3 abgebildete erfindungsgemäße System, insbesondere innerhalb des jeweiligen sicheren Elements 12, 22 eine Übertragungsanwendung auf, die im Folgenden auch als "Transfer Applikation" bzw. als "xfer-App" bezeichnet wird. Eine erste Übertragungsanwendung 15 ist im ersten sicheren Element 12 vorgesehen und eine zweite Übertragungsanwendung 25 ist im zweiten sicheren Element 22 vorgesehen. Die erste Übertragungsanwendung 15 umfasst oder ist verbunden mit einer ersten Schnittstelle 16 zu den im ersten sicheren Element 12 vorhandenen (d.h. beispielhaft der ersten, zweiten bzw. dritten) Anwendungen 13, 13', 13". Die erste Übertragungsanwendung 15 umfasst ferner bzw. ist verbunden mit einer zweiten Schnittstelle 17 zur Kommunikation mit dem zweiten Telekommunikationsendgerät 20 (insbesondere dem zweiten sicheren Element 22) und/oder der Servereinrichtung 101 und/oder einer am ersten Telekommunikationsendgerät 10, jedoch außerhalb des ersten sicheren Elements 12, vorhandenen ersten Geräteanwendung 19 (im Folgenden auch als "Device App" bezeichnet). Die erste Übertragungsanwendung 15, die erste Schnittstelle 16 und die zweite Schnittstelle 17 bilden gemeinsam eine erste Übertragungsschnittstelle 18, die zur Übertragung der Berechtigungsinformation erfindungsgemäß bevorzugt im ersten Telekommunikationsendgerät 10 vorhanden ist. Entsprechend der ersten Übertragungsanwendung 15 umfasst die zweite Übertragungsanwendung 25 eine dritte Schnittstelle 26 zu den im zweiten sicheren Element 22 vorhandenen (d.h. beispielhaft der vierten, fünften bzw. sechsten) Anwendungen 23, 23', 23" bzw. ist mit dieser dritten Schnittstelle 26 verbunden. Die zweite Übertragungsanwendung 25 umfasst ferner bzw.

ist verbunden mit einer vierten Schnittstelle 27 zur Kommunikation mit dem ersten Telekommunikationsendgerät 10 (insbesondere dem ersten sicheren Element 12) und/oder der Servereinrichtung 101 und/oder einer am zweiten Telekommunikationsendgerät 20, jedoch außerhalb des zweiten sicheren Elements 22, vorhandenen zweiten Geräteanwendung 29 (im Folgenden auch als "Device App" bezeichnet). Die zweite Übertragungsanwendung 25, die dritte Schnittstelle 26 und die vierte Schnittstelle 27 bilden gemeinsam eine zweite Übertragungsschnittstelle 28, die zur Übertragung der Berechtigungsinformation erfindungsgemäß bevorzugt im zweiten Telekommunikationsendgerät 20 vorhanden ist.

Die Rolle der ersten und zweiten Übertragungsschnittstellen 18, 28 ist es, eine sichere Kommunikation zwischen den in den sicheren Elementen 12, 22 befindlichen (ersten, zweiten, dritten, vierten, fünften bzw. sechsten) Anwendungen 13, 13', 13", 23, 23', 23" und den dazugehörigen sensitiven (ersten, zweiten, dritten, vierten, fünften bzw. sechsten) Daten 14, 14', 14", 24, 24', 24" aufzubauen. Diese Kommunikation kann mittels verschiedener Übertragungsträger, wie IP-Netzwerke (Internet Protokoll-Netzwerke), SMS (Short Message Service eines Mobilfunknetzes), NFC, oder einer anderen Art von Übertragungssystem aufgebaut werden. Hierbei ist ein solches Übertragungssystem bzw. Übertragungsmedium bevorzugt transparent zu der jeweiligen (ersten, zweiten, dritten, vierten, fünften bzw. sechsten) Anwendung 13, 13', 13", 23, 23', 23" und den dazugehörigen sensitiven (ersten, zweiten, dritten, vierten, fünften bzw. sechsten) Daten 14, 14', 14", 24, 24', 24", um der Anwendung die Übertragung der sensitiven Daten (d.h. "ihrer" sensitiven Daten) zu ermöglichen. Die erste bzw. zweite Übertragungsanwendung 15, 25 (bzw. die erste bzw. zweite Übertragungsschnittstelle 18, 28) übernimmt erfindungsgemäß auch sonstige Aspekte der Übertragung der Berechtigungsinformation, die mit dieser Übertragung verbunden sind, wie beispielsweise die Objekttyperkennung (wie beispielsweise die Erkennung des Übertragungsmodus (transfer mode) der sensitiven Daten, die Anwendungsszenarien und Bedingungen), die Auswahl der Träger, die Anwendung und Einhaltung von Sicherheitsprotokollen, die eventuelle Notifikation von externen Systemen, die Behandlung von Fehlern und dergleichen.

Die Übertragungsschnittstellen 18, 28 stellen jeweilse eine Schnittstelle (bzw. ein Interface) zu den Applikationen bzw. Anwendungen in dem ersten bzw. zweiten sicheren Element 12, 22 (bzw. "secure element") bereit, die den sensitiven Daten der Applikationen zugeordnet sind, im weiteren bezeichnet als xfer App Interface bzw. als erste bzw. dritte Schnittstelle 16, 26. Die Kommunikation zwischen der ersten und zweiten Übertragungsanwendung 15, 25 und den ersten bis sechsten Anwendungen 13, 13', 13", 23, 23', 23" wird über diese erste bzw. dritte Schnittstelle 16, 26 abgewickelt und enthält und vermittelt, neben anderen Daten und Aktivitäten, die Registrierung und de-Registrierung der ersten bis sechsten Anwendungen 13, 13', 13", 23, 23', 23" und deren sensitiven Daten, den Aufbau der sicheren Kommunikation mit diesen Applikationen, das Zwischenspeichern der zu übertragenden sicheren Daten, den Transfer der Objekte, die die sicheren Daten enthalten, im push Modus (push mode) bzw. im pull Modus (pull mode), sowie die Überwachung und Überprüfung des Transferstatus. Die Übertragungsanwendung bzw. xfer Applikation 15, 25 stellt über die zweite und vierte Schnittstelle 17 ,27 auch eine Schnittstelle zu der Infrastruktur bereit, die sich außerhalb der sicheren Elemente 12, 22 befindet (was im weiteren auch als Messaging Interfaces 17, 27 bezeichnet wird). Über diese zweite und vierte Schnittstellen 17, 27 wird die Kommunikation mit den externen Einrichtungen, wie beispielsweise jegliche Anwendungen auf und in jeweils andere sichere Elemente oder auf (andere) persönliche Geräten oder externen Systeme wie Servereinrichtungen 101 oder dergleichen geführt.

Die Rolle der lediglich optionalen Geräteanwendung 19, 29 bzw. Device Applikationm ist es, ein graphische Benutzerschnittstelle (GUI, graphical user interface) für die Übertragungsfunktionalität bzw. Transferfunktionalität bereitzustellen, beispielsweise für die Anzeige und/oder Änderung der Liste der den Übertragungsdienst unterstützenden Applikationen und/oder der übertragbaren Berechtigungen, die mit den sensitiven Datenobjekten verbunden sind, für die Anzeige und/oder Änderung von Charakteristiken, für die Anzeige und/oder Änderung die Transfer- und Nutzungsbedingungen, für die Bereitstellung der Kommunikationskanäle, die nicht direkt vom jeweiligen sicheren Element 12, 22 unterstützt werden, sowie für die Behandlung, die Bereitstellung und Pflege der Benutzereinstellungen. Weitere optionale Systeme innerhalb oder außerhalb des jeweiligen sicheren Elements können für die eventuell erforderliche Benachrichtigung des Service Providers, d.h. der Servereinrichtung 101 über den durchgeführten Transfer, die optionale Datensicherung der sensitiven Daten und die Bereitstellung von sensitiven Daten im Auftrag des Service Providers, die Beachtung von Sicherheitsrichtlinien, vorgesehen sein.

Ein Beispiel für die Übertragung der Berechtigungsinformation gemäß der vorliegenden Erfindung umfasst beispielhaft die folgenden Schritte:
Ein Benutzer des ersten Telekommunikationsendgeräts 10 benutzt die erste Geräteanwendung bzw. Geräte-App 19, die mit der Übertragungsschnittstelle 18 auf dem (bzw. innerhalb des) ersten sicheren Elements 12 (bzw. mit der ersten Übetragungsanwendung 15 über die zweite Schnittstelle 17, "messaging interface") kommuniziert, um alle übertragbaren Berechtigungsinformationen (bzw. Objekte von sensitiven Daten bzw. "sensitive-Daten-Objekte") aufzulisten. Die erste Übertragungsschnittstelle 18 bzw. die erste Übertragungsanwendung 15 liest alle übertragbaren sensitiven Datenobjekte von jeder registrierten ersten, zweiten bzw. dritten Anwendung 13, 13', 13" (über die erste Schnittstelle 16 bzw. die "xferApp Schnittstelle"). Anschließend wird das Ergebnis mittels der ersten Geräteanwendung 19 App dem Benutzer des ersten Telekommunikationsendgeräts 10 dargestellt. Sobald ein Objekt für die Übertragung (seitens des Benutzers) ausgewählt wurde, übernimmt die Übertragungsanwendung 15 die Benachrichtigung der betroffenen ersten, zweiten oder dritten Anwendung 13, 13', 13" mit dem dazugehörigen "sensitiven Datenobjekt", d.h. der ersten, zweiten oder dritten Daten 14, 14', 14", dass die Berechtigungsinformation zur Übertragung ansteht. Daraufhin wird die Berechtigungsinformation bzw. das Objekt von der betroffenen ersten, zweiten oder dritten Anwendung 13, 13', 13" derart gesichert, dass alle Regeln für die Berechtigungsinformation bzw. die betroffene Anwendung entsprechend angewendet werden (beispielsweise erfolgte eine Markierung als gelöscht, wenn es sich bei der zu übertragenden Berechtigungsinformation um eine Information vom Typ "cut & paste" (d.h. der Benutzer des zweiten Telekommunikationsendgeräts 20 soll anstelle des Benutzers des ersten Telekommunikationsendgeräts 10 zur Nutzung eines Dienstes oder einer Sache berechtigt werden) handelt). Die Berechtigungsinformation wird über die erste Schnittstelle 16 ("xfer App Interface") der ersten Übertragungsanwendung 15 zugeleitet. Die erste Übertragungsanwendung 15 wendet in der Folge alle Regeln auf die Berechtigungsinformation (bzw. das Objekt) an (beispielsweise werden die gebündelt, die betreffenden Sicherheitsregeln werden angewendet) und sendet die Berechtigungsinformation bzw. das Objekt über die zweite Schnittstelle 17 ("messaging interface") an die externe Einrichtung, insbesondere die Servereinrichtung 101 bzw. an das zweite Telekommunikationsendgerät 20 und dort insbesondere die zweite Übertragungsanwendung 25. Auf der Empfängerseite, wenn die zweite Übertragungsanwendung 25 Empfänger ist, läuft der Prozess umgekehrt ab. Das fertige "Secure Data Objekt" bzw. vierte, fünfte oder sechste Daten 24, 24', 24" werden mit der jeweiligen Applikation (d.h. der vierten, fünften oder sechsten Anwendung 23, 23', 23") verbunden, die dann in der Lage ist, die Berechtigungsinformation als "secure Data Objekts" zu behandeln und zu nutzen. Erfindungsgemäß ist ferner bevorzugt vorgesehen, dass nach der erfolgreichen Übertragung der Berechtigungsinformation eine Bestätigung der Übertragung an die sendende "xferApp", d.h. die erste Übertragungsanwendung 15 gesendet wird, die die sendende Anwendung (d.h. die erste, zweite oder dritte Anwendung 13, 13', 13") über die sichere Datenübertragung informiert. Die Servereinrichtung 101 wird gemäß einer bevorzugten Ausführungsform über den die erfolgte Übertragung der Berechtigungsinformation ebenfalls informiert.

Gemäß der zweiten Variante des erfindungsgemäßen Übertragungsverfahrens wird das gleiche Ergebnis erzielt, wenn die erste Übertragungsanwendung 15 und ein externes System, insbesondere in Form der Servereinrichtung 101, genutzt werden. Nach der Auswahl der zu übertragenden Berechtigung kommuniziert die erste Übertragungsanwendung 15 mit der Servereinrichtung 101, wobei in diesem Fall die erste Übertragungsanwendung 15 (xferApp) keinerlei sensitive Datenobjekte über die zweite Schnittstelle 17 ("Messaging Interface") übermittelt, sondern nur eine Information über die Änderung der Assoziierung der Berechtigung mit dem zweiten Telekommunikationsendgerät 20. Die Servereinrichtung 101 bzw. das Service-Provider-Backend System triggert die Installation bzw. Übertragung der (dritten, vierten oder fünften Daten) im sicheren Element des zweiten Telekommunikationsendgeräts 20, beispielsweise mittels einer OTA-Installation (Over The Air Installation). Im Anschluss informiert die Servereinrichtung 101 das erste Telekommunikationsendgerät 10 (bzw.die erste Übertragungsanwendung 15 bzw. die erste Geräteanwendung 19) über den Status der Übertragung, damit die sendende Anwendung (erste, zweite oder dritte Anwendung 13, 13', 13") über die sichere Übertragung informiert wird.

## Patentansprüche

1. Verfahren zur Übertragung über ein Telekommunikationsnetz (100)
-- einer in einem Speicherbereich eines Telekommunikationsendgeräts gespeicherten und mittels einer NFC-Schnittstelle (Near Field Communication Schnittstelle) benutzbaren Berechtigungsinformation oder
-- einer mit einem Telekommunikationsendgerät assoziierten und mittels einer NFC-Schnittstelle benutzbaren Berechtigung
von einem ersten Telekommunikationsendgerät (10) auf ein zweites Telekommunikationsendgerät (20),
wobei in einem ersten Zeitpunkt die Berechtigungsinformation in einem ersten Speicherbereich (11) des ersten Telekommunikationsendgeräts (10) gespeichert ist oder die Berechtigung mit dem ersten Telekommunikationsendgerät (10) assoziiert ist und
wobei in einem gegenüber dem ersten Zeitpunkt späteren zweiten Zeitpunkt die Berechtigungsinformation in einem zweiten Speicherbereich (21) des zweiten Telekommunikationsendgeräts (20) gespeichert ist oder die Berechtigung mit dem zweiten Telekommunikationsendgerät (20) assoziiert ist,
wobei das erste Telekommunikationsendgerät (10) neben der NFC-Schnittstelle eine erste Drahtlosschnittstelle aufweist und das zweite Telekommunikationsendgerät (20) neben der NFC-Schnittstelle eine zweite Drahtlosschnittstelle aufweist, wobei zur Übertragung der Berechtigungsinformation vom ersten Telekommunikationsendgerät (10) zum zweiten Telekommunikationsendgerät (20) die erste und zweite Drahtlosschnittstelle verwendet wird oder zur Übertragung der Berechtigung wenigstens die erste Drahtlosschnittstelle verwendet wird, wobei das erste und zweite Telekommunikationsendgerät (10, 20) während der Übertragung der Berechtigungsinformation oder der Berechtigung einen die Reichweite der NFC-Schnittstelle übersteigenden Abstand voneinander aufweisen, wobei die Berechtigungsinformation im ersten Telekommunikationsendgerät (10) in einem ersten sicheren Element (12) (SE, secure element) gespeichert ist, in dem sich auch der erste Speicherbereich (11) befindet und wobei die Berechtigungsinformation im zweiten Telekommunikationsendgerät (20) in einem zweiten sicheren Element (22) gespeichert ist, in dem sich auch der zweite Speicherbereich (21) befindet, wobei das erste sichere Element (12) zur Übertragung der Berechtigungsinformation eine erste Übertragungsschnittstelle (18) aufweist und das zweite sichere Element (22) zur Übertragung der Berechtigungsinformation eine zweite Übertragungsschnittstelle (28) aufweist, wobei die Berechtigungsinformation über die erste und zweite Übertragungsschnittstelle (18, 28) unter Benutzung eines Übertragungskanals transparent übertragen wird, wobei eine nicht über eine Servereinrichtung vermittelte Übertragung erfolgt, **dadurch gekennzeichnet, dass** die Übertragung der Berechtigungsinformation oder der Assoziierung der Berechtigung vom ersten Telekommunikationsendgerät (10) zum zweiten Telekommunikationsendgerät (20) den Benutzer des zweiten Telekommunikationsendgeräts (20)
-- für die Dauer eines vorbestimmten Zeitintervalls oder
-- innerhalb eines vorbestimmten geographischen Bereichs oder
-- für eine Kombination aus einer zeitlichen und einer geographischen Bedingung zur Nutzung eines Dienstes oder einer Sache berechtigt,
wobei diese einschränkende Nutzung durch einen Nutzer des ersten Telekommunikationsendgeräts (10) gesetzt wird.

2. Verfahren nach Anspruch 1, **dadurch gekennzeichnet, dass** das erste und zweite Telekommunikationsendgerät (10) während der Übertragung der Berechtigungsinformation oder der Berechtigung einen die Reichweite eines lokalen Drahtlosnetzwerkes (WLAN, Wireless Local Area Network) übersteigenden Abstand voneinander aufweisen.

3. Verfahren nach einem der vorhergehenden Ansprüchen, **dadurch gekennzeichnet, dass** das erste und zweite sichere Element (12, 22) ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) oder ein integrierter Schaltkreis ist.

4. Verfahren nach einem der vorhergehenden Ansprüchen, **dadurch gekennzeichnet, dass** die Übertragung der Berechtigungsinformation oder der Assoziierung der Berechtigung vom ersten Telekommunikationsendgerät (10) zum zweiten Telekommunikationsendgerät (20) den Benutzer des zweiten Telekommunikationsendgeräts (20) entweder:
-- anstelle des Benutzers des ersten Telekommunikationsendgeräts (10) oder
-- zusätzlich zum Benutzer des ersten Telekommunikationsendgeräts (10) zur Nutzung eines Dienstes oder einer Sache berechtigt.

5. Verfahren nach einem der vorhergehenden Ansprüchen, **dadurch gekennzeichnet, dass** die Berechtigungsinformation über die erste und zweite Übertragungsschnittstelle (18, 28) unter Benutzung eines Übertragungskanals transparent, in geschützter, insbesondere verschlüsselter, Form, übertragen wird.

6. Verfahren nach einem der vorhergehenden Ansprüchen, **dadurch gekennzeichnet, dass** als Berechtigungsinformation
-- sowohl Informationen bezüglich einer innerhalb des ersten und/oder des zweiten sicheren Elements (12, 22) genutzten oder zu nutzenden und an der Übertragung beteiligten Anwendung
-- als auch vertrauliche und geschützte, mit der an der Übertragung beteiligten Anwendung verbundene Informationen (credential informations) übertragen werden.

7. Telekommunikationsendgerät (10) mit einer NFC-Schnittstelle (Near Field Communication Schnittstelle) und einer ersten Drahtlosschnittstelle zur Übertragung
-- einer in einem Speicherbereich des Telekommunikationsendgeräts gespeicherten und mittels einer NFC-Schnittstelle (Near Field Communication Schnittstelle) benutzbaren Berechtigungsinformation oder
-- einer mit dem Telekommunikationsendgerät assoziierten und mittels einer NFC-Schnittstelle benutzbaren Berechtigung
vom Telekommunikationsendgerät (10) auf ein zweites Telekommunikationsendgerät (20),
wobei das Telekommunikationsendgerät (10) derart konfiguriert ist, die Berechtigungsinformation in einem ersten Speicherbereich (11) des Telekommunikationsendgeräts (10) zu speichern, wobei das Telekommunikationsendgerät (10) zur Übertragung der Berechtigungsinformation vom Telekommunikationsendgerät (10) zum zweiten Telekommunikationsendgerät (20) unter Benutzung der ersten Drahtlosschnittstelle konfiguriert ist, wobei das Telekommunikationsendgerät (10) und das zweite Telekommunikationsendgerät (20) während der Übertragung der Berechtigungsinformation einen die Reichweite der NFC-Schnittstelle übersteigenden Abstand voneinander aufweisen, wobei die Berechtigungsinformation im ersten Telekommunikationsendgerät (10) in einem ersten sicheren Element (12) (SE, secure element) gespeichert ist, in dem sich auch der erste Speicherbereich (11) befindet, wobei das erste sichere Element (12) zur Übertragung der Berechtigungsinformation eine erste Übertragungsschnittstelle (18) aufweist, wobei die Berechtigungsinformation über die erste Übertragungsschnittstelle (18) unter Benutzung eines Übertragungskanals transparent übertragen wird, wobei eine nicht über eine Servereinrichtung vermittelte Übertragung erfolgt, **dadurch gekennzeichnet, dass** die Übertragung der Berechtigungsinformation oder der Assoziierung der Berechtigung vom ersten Telekommunikationsendgerät (10) zum zweiten Telekommunikationsendgerät (20) den Benutzer des zweiten Telekommunikationsendgeräts (20)
-- für die Dauer eines vorbestimmten Zeitintervalls oder
-- innerhalb eines vorbestimmten geographischen Bereichs oder
-- für eine Kombination aus einer zeitlichen und einer geographischen Bedingung zur Nutzung eines Dienstes oder einer Sache berechtigt,
wobei das Telekommunikationsendgeräts (10) derart konfiguriert ist, dass diese einschränkende Nutzung durch einen Nutzer des Telekommunikationsendgeräts (10) gesetzt wird.

8. Telekommunikationsendgerät (10) nach Anspruch 7, **dadurch gekennzeichnet, dass** das erste sichere Element (12) ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) oder ein integrierter Schaltkreis ist.

9. Telekommunikationsendgerät (10) nach Anspruch 7 oder 8, **dadurch gekennzeichnet, dass** die Berechtigungsinformation über die erste Übertragungsschnittstelle (18) unter Benutzung eines Übertragungskanals transparent, in geschützter, insbesondere verschlüsselter, Form, übertragen wird, wobei das Telekommunikationsendgerät (10) insbesondere derart konfiguriert ist, dass als Berechtigungsinformation
-- sowohl Informationen bezüglich einer innerhalb des ersten und/oder des zweiten sicheren Elements (12, 22) genutzten oder zu nutzenden und an der Übertragung beteiligten Anwendung
-- als auch vertrauliche und geschützte, mit der an der Übertragung beteiligten Anwendung verbundene Informationen (credentials informations) übertragen werden.

10. System, umfassend ein erstes Telekommunikationsendgerät (10) und ein zweites Telekommunikationsendgerät (20), zur Übertragung über ein Telekommunikationsnetz (100)
-- einer in einem Speicherbereich eines Telekommunikationsendgeräts gespeicherten und mittels einer NFC-Schnittstelle (Near Field Communication Schnittstelle) benutzbaren Berechtigungsinformation oder
-- einer mit einem Telekommunikationsendgerät assoziierten und mittels einer NFC-Schnittstelle benutzbaren Berechtigung
von dem ersten Telekommunikationsendgerät (10) auf das zweite Telekommunikationsendgerät (20),
wobei das System derart konfiguriert ist, die Berechtigungsinformation in einem ersten Speicherbereich (11) des ersten Telekommunikationsendgeräts (10) zu speichern oder die Berechtigung mit dem ersten Telekommunikationsendgerät (10) zu assoziieren und/oder wobei das System derart konfiguriert ist, die Berechtigungsinformation in einem zweiten Speicherbereich (21) des zweiten Telekommunikationsendgeräts (20) zu speichern oder die Berechtigung mit dem zweiten Telekommunikationsendgerät (20) zu assoziieren,
wobei das erste Telekommunikationsendgerät (10) neben der NFC-Schnittstelle eine erste Drahtlosschnittstelle aufweist und das zweite Telekommunikationsendgerät (20) neben der NFC-Schnittstelle eine zweite Drahtlosschnittstelle aufweist, wobei das System zur Übertragung der Berechtigungsinformation vom ersten Telekommunikationsendgerät (10) zum zweiten Telekommunikationsendgerät (20) unter Benutzung der ersten und zweiten Drahtlosschnittstelle konfiguriert ist oder zur Übertragung der Berechtigung unter Benutzung wenigstens der ersten Drahtlosschnittstelle konfiguriert ist, wobei das System derart konfiguriert ist, dass das erste und zweite Telekommunikationsendgerät (10, 20) bei der Übertragung der Berechtigungsinformation oder der Berechtigung einen die Reichweite der NFC-Schnittstelle übersteigenden Abstand voneinander aufweisen, wobei die Berechtigungsinformation im ersten Telekommunikationsendgerät (10) in einem ersten sicheren Element (12) (SE, secure element) gespeichert ist, in dem sich auch der erste Speicherbereich (11) befindet und wobei die Berechtigungsinformation im zweiten Telekommunikationsendgerät (20) in einem zweiten sicheren Element (22) gespeichert ist, in dem sich auch der zweite Speicherbereich (21) befindet, wobei das erste sichere Element (12) zur Übertragung der Berechtigungsinformation eine erste Übertragungsschnittstelle (18) aufweist und das zweite sichere Element (22) zur Übertragung der Berechtigungsinformation eine zweite Übertragungsschnittstelle (28) aufweist, wobei die Berechtigungsinformation über die erste und zweite Übertragungsschnittstelle (18, 28) unter Benutzung eines Übertragungskanals transparent übertragen wird, wobei eine nicht über eine Servereinrichtung vermittelte Übertragung erfolgt, **dadurch gekennzeichnet, dass** die Übertragung der Berechtigungsinformation oder der Assoziierung der Berechtigung vom ersten Telekommunikationsendgerät (10) zum zweiten Telekommunikationsendgerät (20) den Benutzer des zweiten Telekommunikationsendgeräts (20)
-- für die Dauer eines vorbestimmten Zeitintervalls oder
-- innerhalb eines vorbestimmten geographischen Bereichs oder
-- für eine Kombination aus einer zeitlichen und einer geographischen Bedingung zur Nutzung eines Dienstes oder einer Sache berechtigt,
wobei das erste Telekommunikationsendgerät (10) derart konfiguriert ist, dass diese einschränkende Nutzung durch einen Nutzer des ersten Telekommunikationsendgeräts (10) gesetzt wird.

11. System nach Anspruch 10, **dadurch gekennzeichnet, dass** die Berechtigungsinformation im ersten Telekommunikationsendgerät (10) in einem ersten sicheren Element (12) (SE, secure element) gespeichert ist, in dem sich auch der erste Speicherbereich (11) befindet und dass die Berechtigungsinformation im zweiten Telekommunikationsendgerät (20) in einem zweiten sicheren Element (22) gespeichert ist, in dem sich auch der zweite Speicherbereich (21) befindet, wobei das erste und zweite sichere Element (12, 22) insbesondere ein SE-Element (Secure Element) gemäß dem GlobalPlatform-Standard oder ein UICC (Universal Integrated Circuit Card) oder eine microSD-Karte (Secure Digital card) oder eine ICC-Karte (integrated circuit card) ist.

12. Computerprogramm mit Programmcodemitteln, mit deren Hilfe die Schritte eines Verfahrens nach einem der Ansprüche 1 bis 6 durchführbar sind, wenn das Computerprogramm auf dem ersten Telekommunikationsendgerät (10) ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass die Schritte eines Verfahrens nach einem der Ansprüche 1 bis 6 durchführbar sind, wenn das Computerprogramm auf dem ersten Telekommunikationsendgerät (10) ausgeführt wird.

## Claims

1. Method for transferring, via a telecommunications network (100),
- a piece of authorisation information which is stored in a storage region of a telecommunications terminal and usable by an NFC (near-field communication) interface or
- an authorisation which is associated with a telecommunications terminal and usable by an NFC interface
from a first telecommunications terminal (10) to a second telecommunications terminal (20),
at a first time the piece of authorisation information being stored in a first storage region (11) of the first telecommunications terminal (10) or the authorisation being associated with the first telecommunications terminal (10), and
at a second time later than the first time the piece of authorisation information being stored in a second storage region (21) of the second telecommunications terminal (20) or the authorisation being associated with the second telecommunications terminal (20),
the first telecommunications terminal (10) having a first wireless interface as well as the NFC terminal, and the second telecommunications terminal (20) having a second wireless interface as well as the NFC terminal, the first and second wireless terminal being used for transmitting the piece of authorisation information from the first telecommunications terminal (10) to the second telecommunications terminal (20) or at least the first wireless interface being used for transmitting the authorisation, the first and second telecommunications terminal (10, 20) being at a distance from one another exceeding the range of the NFC interface during the transmission of the piece of authorisation information or the authorisation, the piece of authorisation information in the first telecommunications terminal (10) being stored in a first secure element (SE) (12) in which the first storage region (11) is also located, and the piece of authorisation information in the second telecommunications terminal (20) being stored in a second secure element (22) in which the second storage region (21) is also located, the first secure element (12) having a first transmission interface (18) for transmitting the piece of authorisation information, and the second secure element (22) having a second transmission interface (28) for transmitting the piece of authorisation information, the piece of authorisation information being transmitted via the first and second transmission interface (18, 28) transparently using a transmission channel, the transmission not being conveyed via a server device, **characterised in that**
the transmission of the piece of authorisation information or of the association of the authorisation from the first telecommunications terminal (10) to the second telecommunications terminal (20) authorises the user of the second telecommunications terminal (20) to use a service or item
- for the duration of a predetermined time interval or
- within a predetermined geographical region or
- for a combination of a temporal and a geographical condition,
this restrictive use being set by a user of the first telecommunications terminal (10).

2. Method according to claim 1, **characterised in that** the first and second telecommunications terminal (10) are at a distance from one another exceeding the range of a wireless local area network (WLAN) during the transmission of the piece of authorisation information or the authorisation.

3. Method according to any of the preceding claims, **characterised in that** the first and second secure element (12, 22) are a secure element (SE) in accordance with the Global Platform standard or a UICC (universal integrated circuit card) or a microSD (secure digital) card or an ICC (integrated circuit card) or integrated circuit.

4. Method according to any of the preceding claims, **characterised in that** the transmission of the piece of authorisation information or of the association of the authorisation from the first telecommunications terminal (10) to the second telecommunications terminal (20) authorises the user of the second telecommunications terminal (20) to use a service or item either:
- instead of the user of the first telecommunications terminal (10) or
- in addition to the user of the first telecommunications terminal (10).

5. Method according to any of the preceding claims, **characterised in that** the piece of authorisation information is transmitted via the first and second transmission interface (18, 28) transparently using a transmission channel, in a protected, in particular encrypted form.

6. Method according to any of the preceding claims, **characterised in that**
- both information regarding an application which is used or is to be used within the first and/or the second secure element (12, 22) and is involved in the transmission
- and confidential, protected information (credential information) linked to the application involved in the transmission
are transmitted as pieces of authorisation information.

7. Telecommunications terminal (10) comprising an NFC (near-field communication) interface and a first wireless interface for transmitting
- a piece of authorisation information which is stored in a storage region of a telecommunications terminal and usable by an NFC (near-field communication) interface or
- an authorisation which is associated with a telecommunications terminal and usable by an NFC interface
from the telecommunications terminal (10) to a second telecommunications terminal (20),
the telecommunications terminal (10) being configured to store the piece of authorisation information in a first storage region (11) of the telecommunications terminal (10), the telecommunications terminal (10) being configured to transmit the piece of authorisation information from the telecommunications terminal (10) to the second telecommunications terminal (20) using the first wireless interface, the telecommunications terminal (10) and the second telecommunications terminal (20) being at a distance from one another exceeding the range of the NFC interface during the transmission of the piece of authorisation information, the piece of authorisation information in the first telecommunications terminal (10) being stored in a first secure element (SE) (12) in which the first storage region (11) is also located, the first secure element (12) having a first transmission interface (18) for transmitting the piece of authorisation information, the piece of authorisation information being transmitted via the first transmission interface (18) transparently using a transmission channel, the transmission not being conveyed via a server device,
**characterised in that**
the transmission of the piece of authorisation information or of the association of the authorisation from the first telecommunications terminal (10) to the second telecommunications terminal (20) authorises the user of the second telecommunications terminal (20) to use a service or item
- for the duration of a predetermined time interval or
- within a predetermined geographical region or
- for a combination of a temporal and a geographical condition,
the telecommunications terminal (10) being configured in such a way that this restrictive use is set by a user of the first telecommunications terminal (10).

8. Telecommunications terminal (10) according to claim 7, **characterised in that** the first secure element (12) is a secure element (SE) in accordance with the Global Platform standard or a UICC (universal integrated circuit card) or a microSD (secure digital) card or an ICC (integrated circuit card) or integrated circuit.

9. Telecommunications terminal (10) according to either claim 7 or claim 8, **characterised in that** the piece of authorisation information is transmitted via the first transmission interface (18) transparently using a transmission channel, in a protected, in particular encrypted form, the telecommunications terminal (10) in particular being configured in such a way that
- both information regarding an application which is used or is to be used within the first and/or the second secure element (12, 22) and is involved in the transmission
- and confidential, protected information (credential information) linked to the application involved in the transmission
are transmitted as pieces of authorisation information.

10. System comprising a first telecommunications terminal (10) and a second telecommunications terminal (20) for transmitting, via a telecommunications network (100),
- a piece of authorisation information which is stored in a storage region of a telecommunications terminal and usable by an NFC (near-field communication) interface or
- an authorisation which is associated with a telecommunications terminal and usable by an NFC interface
from the first telecommunications terminal (10) to the second telecommunications terminal (20),
the system being configured to store the piece of authorisation information in a first storage region (11) of the first telecommunications terminal (10) or to associate the authorisation with the first telecommunications terminal (10) and/or the system being configured to store the piece of authorisation information in a second storage region (21) of the second telecommunications terminal (20) or to associate the authorisation with the second telecommunications terminal (20),
the first telecommunications terminal (10) having a first wireless interface as well as the NFC terminal, and the second telecommunications terminal (20) having a second wireless interface as well as the NFC terminal, the system being configured to transmit the piece of authorisation information from the first telecommunications terminal (10) to the second telecommunications terminal (20) using the first and second wireless interface or to transmit the authorisation using at least the first wireless interface, the system being configured in such a way that the first and second telecommunications terminal (10, 20) are at a distance from one another exceeding the range of the NFC interface during the transmission of the piece of authorisation information, the piece of authorisation information in the first telecommunications terminal (10) being stored in a first secure element (SE) (12) in which the first storage region (11) is also located, and the piece of authorisation information in the second telecommunications terminal (20) being stored in a second secure element (22) in which the second storage region (21) is also located, the first secure element (12) having a first transmission interface (18) for transmitting the piece of authorisation information, and the second secure element (22) having a second transmission interface (28) for transmitting the piece of authorisation information, the piece of authorisation information being transmitted via the first and second transmission interface (18, 28) transparently using a transmission channel, the transmission not being conveyed via a server device,
**characterised in that**
the transmission of the piece of authorisation information or of the association of the authorisation from the first telecommunications terminal (10) to the second telecommunications terminal (20) authorises the user of the second telecommunications terminal (20) to use a service or item
- for the duration of a predetermined time interval or
- within a predetermined geographical region or
- for a combination of a temporal and a geographical condition,
the first telecommunications terminal (10) being configured in such a way that this restrictive use is set by a user of the first telecommunications terminal (10).

11. System according to claim 10, **characterised in that** the piece of authorisation information in the first telecommunications terminal (10) is stored in a first secure element (SE) (12) in which the first storage region (11) is also located, and **in that** the piece of authorisation information in the second telecommunications terminal (20) is stored in a second secure element (22) in which the second storage region (21) is also located, the first and second securing element (12, 22) in particular being a secure element (SE) in accordance with the Global Platform standard or a UICC (universal integrated circuit card) or a microSD (secure digital) card or an ICC (integrated circuit card) or integrated circuit.

12. Computer program comprising program coding means by way of which the steps of a method according to any of claims 1 to 6 can be carried out when the computer program is run on the first telecommunications terminal (10).

13. Computer program product comprising a computer-readable medium and a computer program stored on the computer-readable medium and comprising program coding means suitable for it to be possible for the steps of a method according to any of claims 1 to 6 to be carried out when the computer program is run on the first telecommunications terminal (10) .

## Revendications

1. Procédé de transmission par le biais d'un réseau de télécommunications (100)
- d'une information d'autorisation mémorisée dans une zone de mémoire d'un terminal de télécommunication et utilisable à l'aide d'une interface NFC (interface Near Field Communication) ou
- d'une autorisation associée à un terminal de télécommunication et utilisable à l'aide d'une interface NFC
d'un premier terminal de télécommunication (10) à un second terminal de télécommunication (20),
dans lequel, dans un premier instant, l'information d'autorisation est mémorisée dans une première zone de mémoire (11) du premier terminal de télécommunication (10) ou l'autorisation est associée au premier terminal de télécommunication (10)
et
dans lequel, dans un second instant plus tardif vis-à-vis du premier instant, l'information d'autorisation est instant dans une seconde zone de mémoire (21) du second terminal de télécommunication (20)
ou l'autorisation est associée au second terminal de télécommunication (20),
dans lequel le premier terminal de télécommunication (10) présente, en plus de l'interface NFC, une première interface sans fil et le second terminal de télécommunication (20) présente, en plus de l'interface NFC, une seconde interface sans fil, dans lequel pour transmettre l'information d'autorisation depuis le premier terminal de télécommunication (10) vers le second terminal de télécommunication (20) la première et la seconde interface sans fil est utilisée ou pour transmettre l'autorisation au moins la première interface sans fil est utilisée, dans lequel le premier et le second terminal de télécommunication (10, 20) présentent, pendant la transmission de l'information d'autorisation ou de l'autorisation, une distance l'un de l'autre qui dépasse la portée de l'interface NFC, dans lequel l'information d'autorisation dans le premier terminal de télécommunication (10) est mémorisée dans un premier élément sécuritaire (12) (SE, Secure Element) où se trouve également la première zone de mémoire (11), et dans lequel l'information d'autorisation dans le second terminal de télécommunication (20) est mémorisée dans un second élément sécuritaire (22) dans lequel se trouve également la seconde zone de mémoire (21), dans lequel le premier élément sécuritaire (12) présente, pour transmettre l'information d'autorisation, une première interface de transmission (18) et le second élément sécuritaire (22) présente, pour transmettre l'information d'autorisation, une seconde interface de transmission (28), dans lequel l'information d'autorisation est transmise de manière transparente par le biais de la première et la seconde interface de transmission (18, 28) en utilisant un canal de transmission, dans lequel on obtient une transmission non véhiculée par le biais d'un moyen de serveur,
**caractérisé en ce**
**que** la transmission de l'information d'autorisation ou de l'association de l'autorisation depuis le premier terminal de télécommunication (10) vers le second terminal de télécommunication (20) autorise l'utilisateur du second terminal de télécommunication (20)
- pour la durée d'un intervalle de temps prédéfini ou
- à l'intérieur d'une zone géographique prédéfinie ou
- pour une combinaison d'une condition temporelle et d'une condition géographique pour utiliser un service ou un objet,
dans lequel cette utilisation restreinte est définie par un utilisateur du premier terminal de télécommunication (10).

2. Procédé selon la revendication 1, **caractérisé en ce que** le premier et le second terminal de télécommunication (10) pendant la transmission de l'information d'autorisation ou de l'autorisation présentent une distance l'un de l'autre qui dépasse la portée d'un réseau sans fil local (WLAN, Wireless Local Area Network).

3. Procédé selon une des revendications précédentes, **caractérisé en ce**
**que** le premier et le second élément sécuritaire (12, 22) est un élément SE (*Secure Element*) conformément à la norme « Global Platform » ou une carte à circuit intégré universelle (UICC : *Universal Integrated Circuit Card*) ou une carte microSD (*carte Secure Digital*) ou une carte ICC (Integrated Circuit Card) ou un circuit intégré.

4. Procédé selon une des revendications précédentes, **caractérisé en ce**
**que** la transmission de l'information d'autorisation ou de l'association de l'autorisation depuis le premier terminal de télécommunication (10) vers le second terminal de télécommunication (20) autorise l'utilisateur du second terminal de télécommunication (20), soit :
- à la place de l'utilisateur du premier terminal de télécommunication (10), soit
- en plus de l'utilisateur du premier terminal de télécommunication (10),
pour utiliser un service ou un objet.

5. Procédé selon une des revendications précédentes, **caractérisé en ce**
**que** l'information d'autorisation est transmise de manière transparente par le biais de la première ou la seconde interface de transmission (18, 28) en utilisant un canal de transmission, sous forme protégée, en particulier cryptée.

6. Procédé selon une des revendications précédentes, **caractérisé en ce que**, en tant qu'information d'autorisation,
- aussi bien des informations relatives à une application utilisée ou à utiliser à l'intérieur du premier et/ou du second élément sécuritaire (12, 22) et participant à la transmission
- que des informations confidentielles et protégées sont transmises avec les informations liées à l'application participant à la transmission (credential informations).

7. Terminal de télécommunication (10) comprenant une interface NFC (Interface Near Field Communication) et une première interface sans fil pour la transmission
- d'une information d'autorisation mémorisée dans une zone de mémoire du terminal de télécommunication et utilisable à l'aide d'une interface NFC (interface Near Field Communication) ou
- d'une autorisation associée au terminal de télécommunication et utilisable à l'aide d'une interface NFC
- d'un premier terminal de télécommunication (10) à un second terminal de télécommunication (20),
dans lequel le terminal de télécommunication (10) est configuré de telle sorte que l'information d'autorisation doit être mémorisée dans une première zone de mémoire (11) du terminal de télécommunication (10), dans lequel le terminal de télécommunication (10) est configuré pour la transmission de l'information d'autorisation depuis le terminal de télécommunication (10) vers le second terminal de télécommunication (20) en utilisant la première interface sans fil, dans lequel le terminal de télécommunication (10) et le second terminal de télécommunication (20) présentent, pendant la transmission de l'information d'autorisation, une distance l'un de l'autre qui dépasse la portée de l'interface NFC, dans lequel l'information d'autorisation dans le premier terminal de télécommunication (10) est mémorisée dans un premier élément sécuritaire (12) (SE, Secure Element) où se trouve également la première zone de mémoire (11), dans lequel le premier élément sécuritaire (12) présente pour la transmission de l'information d'autorisation une première interface de transmission (18), dans lequel l'information d'autorisation est transmise de manière transparente par le biais de la première interface de transmission (18) en utilisant un canal de transmission, dans lequel on obtient une transmission non véhiculée par le biais d'un moyen de serveur,
**caractérisé en ce**
**que** la transmission de l'information d'autorisation ou de l'autorisation depuis le premier terminal de télécommunication (10) vers le second terminal de télécommunication (20) autorise l'utilisateur du second terminal de télécommunication (20)
- pour la durée d'un intervalle de temps prédéfini ou
- à l'intérieur d'une zone géographique prédéfinie ou
- pour une combinaison d'une condition temporelle et d'une condition géographique
- pour utiliser un service ou un objet,
dans lequel le terminal de télécommunication (10) est configuré de telle sorte que cette utilisation restreinte est définie par un utilisateur du terminal de télécommunication (10).

8. Terminal de télécommunication (10) selon la revendication 7, **caractérisé en ce**
**que** le premier élément sécuritaire (12) est un élément SE (*Secure Element*) conformément à la norme « Global Platform » ou une carte à circuit intégré universelle (UICC : *Universal Integrated Circuit Card*) ou une carte microSD (carte Secure Digital) ou une carte ICC (*Integrated Circuit Card*) ou un circuit intégré.

9. Terminal de télécommunication (10) selon la revendication 7 ou 8, **caractérisé en ce**
**que** l'information d'autorisation est transmise de manière transparente par le biais de la première interface de transmission (18) en utilisant un canal de transmission, sous forme protégée, en particulier cryptée, dans lequel le terminal de télécommunication (10) est en particulier configuré de telle sorte que, en tant qu'information d'autorisation,
- aussi bien des informations relatives à une application utilisée ou à utiliser à l'intérieur du premier et/ou du second élément sécuritaire (12, 22) et participant à la transmission
- **que** des informations confidentielles et protégées sont transmises avec les informations liées à l'application participant à la transmission (credentials informations)

10. Système, comprenant un premier terminal de télécommunication (10) et un second terminal de télécommunication (20), pour la transmission par le biais d'un réseau de télécommunications (100)
- d'une information d'autorisation mémorisée dans une zone de mémoire d'un terminal de télécommunication et utilisable à l'aide d'une interface NFC (interface Near Field Communication) ou
- d'une autorisation associée à un terminal de télécommunication et utilisable à l'aide d'une interface NFC
du premier terminal de télécommunication (10) au second terminal de télécommunication (20),
dans lequel le système est configuré de telle sorte que l'information d'autorisation doit être mémorisée dans une première zone de mémoire (11) du premier terminal de télécommunication (10) ou l'autorisation doit être associée au premier terminal de télécommunication (10) et/ou dans lequel le système est configuré de telle sorte que l'information d'autorisation doit être mémorisée dans une seconde zone de mémoire (21) du second terminal de télécommunication (20) ou l'autorisation doit être associée au second terminal de télécommunication (20),
dans lequel le premier terminal de télécommunication (10) présente, en plus de l'interface NFC, une première interface sans fil et le second terminal de télécommunication (20), présente, en plus de l'interface NFC, une seconde interface sans fil, dans lequel le système est configuré pour transmettre l'information d'autorisation depuis le premier terminal de télécommunication (10) vers le second terminal de télécommunication (20) en utilisant la première et la seconde interface sans fil ou pour transmettre l'autorisation en utilisant au moins la première interface sans fil, dans lequel le système est configuré de telle sorte que le premier et le second terminal de télécommunication (10, 20) présentent, pendant la transmission de l'information d'autorisation ou de l'autorisation, une distance l'un de l'autre qui dépasse la portée de l'interface NFC, dans lequel l'information d'autorisation dans le premier terminal de télécommunication (10) est mémorisée dans un premier élément sécuritaire (12) (SE, Secure Element) où se trouve également la première zone de mémoire (11) et dans lequel l'information d'autorisation dans le second terminal de télécommunication (20) est mémorisée dans un second élément sécuritaire (22) où se trouve également la seconde zone de mémoire (21), dans lequel le premier élément sécuritaire (12) présente, pour transmettre l'information d'autorisation, une première interface de transmission (18) et le second élément sécuritaire (22) présente, pour transmettre l'information d'autorisation, une seconde interface de transmission (28), dans lequel l'information d'autorisation est transmise de manière transparente par le biais de la première et la seconde interface de transmission (18, 28) en utilisant un canal de transmission, dans lequel on obtient une transmission non véhiculée par le biais d'un moyen de serveur,
**caractérisé en ce**
**que** la transmission de l'information d'autorisation ou de l'association de l'autorisation depuis le premier terminal de télécommunication (10) vers le second terminal de télécommunication (20) autorise l'utilisateur du second terminal de télécommunication (20)
- pour la durée d'un intervalle de temps prédéfini ou
- à l'intérieur d'une zone géographique prédéfinie ou
- pour une combinaison d'une condition temporelle et d'une condition géographique
pour utiliser un service ou un objet,
dans lequel le premier terminal de télécommunication (10) est configuré de telle sorte que cette utilisation restreinte est définie par un utilisateur du premier terminal de télécommunication (10).

11. Système selon la revendication 10, **caractérisé en ce que** l'information d'autorisation est mémorisée dans le premier terminal de télécommunication (10) dans un premier élément sécuritaire (12) (SE, Secure Element) où se trouve également la première zone de mémoire (11) et **en ce que** l'information d'autorisation dans le second terminal de télécommunication (20) est mémorisée dans un second élément sécuritaire (22) où se trouve également la seconde zone de mémoire (21), dans lequel le premier et le second élément sécuritaire (12, 22) est en particulier un élément SE (Secure Element) conformément à la norme « Global Platform » ou une carte à circuit intégré universelle (UICC : Universal Integrated Circuit Card) ou une carte microSD (Carte Secure Digital) ou une carte ICC (Integrated Circuit Card).

12. Programme informatique, comprenant des moyens de code de programme qui permettent de mettre en oeuvre les étapes d'un procédé selon une des revendications 1 à 6 lorsque le programme informatique est exécuté sur le premier terminal de télécommunication (10).

13. Produit de programme informatique, comprenant un support lisible par ordinateur et un programme informatique mémorisé sur le support lisible par ordinateur comportant des moyens de code de programme, qui sont capables de mettre en oeuvre les étapes d'un procédé selon une des revendications 1 à 6 lorsque le programme informatique est exécuté sur le premier terminal de télécommunication (10).
